Europäisches Patentamt

European Patent Office

Office européen des brevets

(19)

(11) **EP 1 126 735 A1**

(12) **EUROPEAN PATENT APPLICATION**

(43) Date of publication:
**22.08.2001 Bulletin 2001/34**

(51) Int Cl.⁷: **H04Q 7/36**

(21) Application number: **00301169.9**

(22) Date of filing: **15.02.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **LUCENT TECHNOLOGIES INC.**
**Murray Hill, New Jersey 07974-0636 (US)**

(72) Inventor: **Al-Housami, Housam**
**Swindon, Wiltshire SN5 9SQ (GB)**

(74) Representative: **Williams, David John et al**
**Lucent Technologies UK Limited,**
**5 Mornington Road**
**Woodford Green, Essex IG8 0TU (GB)**

(54) **Mobile radio telecommunication system**

(57)    In a TDMA system, the power of the common downlink control physical channel is varied in proportion to the traffic in the cell so that handoff zones are controlled.

FIG. 1

EP 1 126 735 A1

## Description

This invention relates to a mobile radio telecommunications system with improved control of handoff, that is, the transfer of control of a call from one telecommunications cell to another. The invention relates especially to a system which has an improved response to the phenomenon known as "cell breathing".

In a radio telecommunications system, the area of coverage is divided into telecommunications cells which are circular in shape and which have overlapping parts known as handoff regions. The cell overlaps are arranged so that there are no coverage holes.

In a Time Division Multiple Access (TDMA) system, for efficiency, coverage planning is based on a power budget. A power budget is calculated to provide maximum usable path loss, and takes into account transmission power, the receiver sensitivity, and the gains and losses for the link.

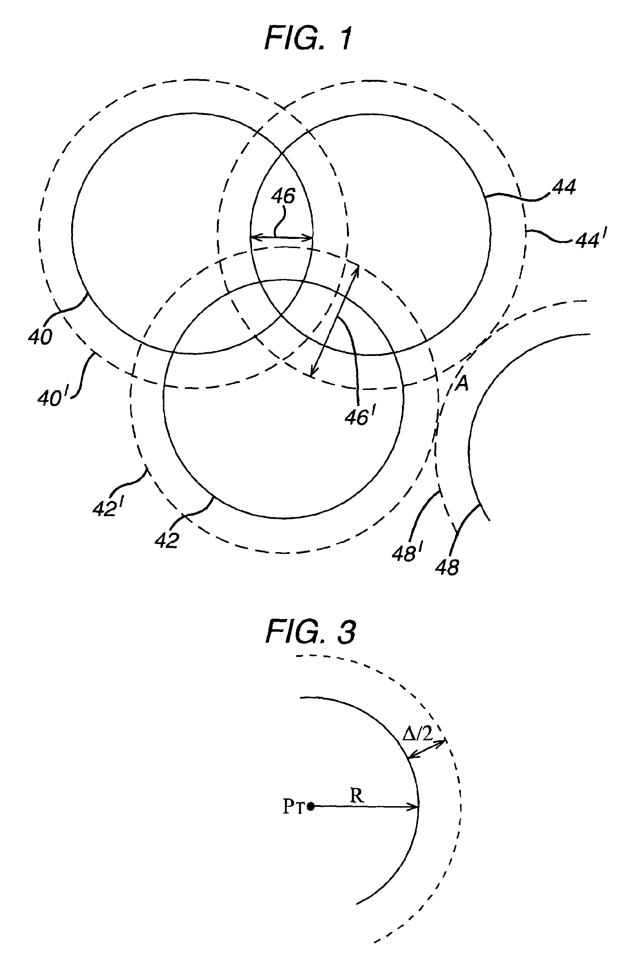

Such an arrangement is illustrated in Figure 1, in which three circular cells 40, 42, 44, shown by the full lines, have overlaps or handover zones, such as zone 46, of a desired width, the width in the nominal case.

In a wide band system, however, cell users in an area potentially interfere with each other. A link budget will provide a wanted signal at the required level, but the signal to noise ratio in the channel is determined by the number of other users.

The result is that a mobile system on the edge of a cell area may operate in a satisfactory manner, but be unable to operate when traffic load within the cell is high. In effect, the coverage area of the cells 40, 42, 44 has shrunk. A fourth cell 48 may have a smaller overlap and inspection of Figure 1 shows that there may be positions, such as at reference A, where effective shrinkage of the cell 48 would leave a mobile without connection, i.e. in a coverage hole.

This effective shrinkage of cell size is known as "cell breathing".

In third generation wide band systems such as Code Division Multiple Access (CDMA) - 2000 and Universal Mobile Telephone System (UMTS), cell breathing is amplified by the use of high power, high rate terminals. Such terminals have a small spreading factor and therefore they contribute high interference; the result may be to cause fast cell breathing.

A solution to this problem is to provide proper cell dimensioning for a certain blocking probability. In a system designed to accommodate the predicted traffic, including the high bit rate traffic of CDMA and UMTS, coverage holes induced by cell breathing are avoided. Classically, systems are designed assuming a traffic of fifty per cent loading, which provides some capacity to respond to a sudden increase in traffic.

Cell breathing can cause particular difficulty in relation to information on a channel which must be received by all users, such as information on a Broadcast Channel or a Common Pilot Channel or a Synchronization Channel.

Another effect of cell breathing occurs during low traffic periods, e.g. at night. At low loading, the effective area of a cell increases, as shown by the dotted lines 40', 42', 44' in Figure 1; the handoff zone, such as zone 46', increases when both cells carry low traffic, which is likely to be the case at night, but also increases when only one of the two overlapping cells carries low traffic. This is the other extreme of cell breathing. When it occurs, a mobile system in an enlarged handoff zone will "see" many pilots, and will have legs to several base transceiver stations which is undesirable. The effect is especially problematic in overlay-underlay cell hierarchies.

It is an object of the invention to provide a system in which expansion of handoff zones during low traffic periods is reduced.

According to the invention, a mobile radio telecommunications system comprising a plurality of base transceiver stations which provide communications in a plurality of telecommunication cells each having a predetermined radius and a predetermined handover width , said communications to each cell being provided by a plurality of physical channels, one said physical channel bearing a pilot signal, characterised in that the power of said physical channel bearing the pilot signal is varied in accordance with the loading in the associated cell.

Also according to the invention, in a mobile radio telecommunications system comprising a plurality of base transceiver stations each transmitting information on a physical channel, said physical channel defining a plurality of telecommunications cells of radius R and a certain required handoff width, each base transceiver station being arranged to sense the telecommunications traffic in the cell which it controls, a method of controlling the hand off width characterized by each base transceiver station varying the power of its physical channel in accordance with the sensed telecommunications traffic.

In the drawings, Figure 1 illustrates three telecommunications cells subject to cell breathing;

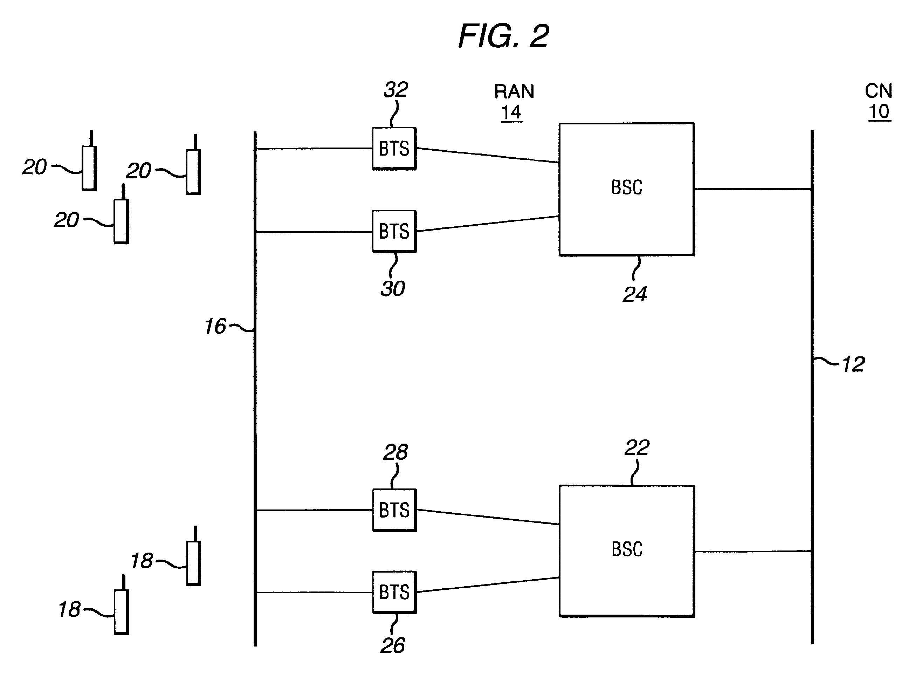

The invention will be described by way of example only with reference to Figures 2 and 3 in which:-

    Figure 2 illustrates schematically a part of the Global System for Mobile Telecommunications (GSM) network; and
    Figure 3 illustrates the derivation of a preferred transmitted power change.

In Figure 2, the GSM comprises a Core Network (CN) 10 with an interface 12 to the Radio Access Network (RAN) 14 which in turn has a radio interface 16 to mobile users 18, 20. Within the RAN are a number of Base Station Controllers BSCs 22, 24, of which two only are illustrated. Each BSC controls a number of Base Transceiver Stations (BTSs); BSC 22 controls two BTSs 26, 28 and BSC 24 controls to BTSs 30, 32; in practice each BSC controls several BTSs but two only are shown for clarity. BTSs 26, 28 control the mobile users 18 and BTSs 30, 32 control the mobile users 20.

Each BTS controls one telecommunications cell as referred to above and shown in Figure 1. Each BTS transmits a low rate Common Pilot Channel (CPICH) which carries the system and cell specific information for the mobile users within the cell controlled by that BTS. The CPICH is mapped to the Common Downlink Control Physical Channel (CCPCH).

Inspection of Figure 2 will show that any of the mobiles 20 could receive signals from the CCPCH channels transmitted by either of the BTSs 30, 32, and any mobile 20 could be within an overlap region. In an extreme case, any of the mobiles 20 could also receive signals from the BTSs 26, 28.

In the invention, each BTS 26, 28, 30, 32 is arranged to vary the power of its CCPCH channel. When the traffic on a BTS is low, CCPCH power is reduced. Such a reduction is arranged to ensure that the handoff region 46 (see Figure 1) of the cell controlled by that BTS remains at the width in the nominal case. Traffic levels in a cell are conventionally measured by a BTS.

Figure 3 illustrates a signal transmitted at power $P_T$ for the centre of the cell. In a propagation environment, power decreases with distance, and in theory path loss is $\frac{1}{d^2}$ where $d$ is distance. In practice the presence of trees and other obstacles in the path means that the path loss is greater, $\frac{1}{d^n}$ where $n$, the path loss exponent, is often in the range 2 to 4. Classically, the value 3.8 is often used for in-city cell planning.

If the required cell radius is R and the BTS required transmission power is $P_{T1}$ to achieve R, then at the edge of cell the received power is $\frac{P_{T1}}{R^n}$. If the width of the handoff region increases by $\Delta$ due to low traffic density, then the radius of an individual cell increases by $\Delta/2$. If the transmission power in this case is $P_{T2}$ then the received power at the new edge of cell is

$$\frac{P_{T2}}{\left(R+\frac{\Delta}{2}\right)^n}.$$

The requirement is that the power at the edge of cell is the same when the cell radius change, thus the ratio between the two transmission powers is:

$$\frac{P_{T1}}{P_{T2}} = \frac{\left(R+\frac{\Delta}{2}\right)^n}{R^n}.$$

The transmitted power in the nominal case should be reduced by the factor

$$f = \frac{R^n}{\left(R+\frac{\Delta}{2}\right)^n}$$

when the cell radius has expanded.

An algorithm based on the above expression is run in every BTS 26, 28, 30, 32 in the system. The result is that the handoff zone is controllable.

**Claims**

1. A mobile radio telecommunications system comprising a plurality of base transceiver stations 26, 28, 30, 32 which provide communications in a plurality of telecommunication cells 40, 42, 44 each having a predetermined radius and a predetermined handover width 46, said communications to each cell being provided by a plurality of physical channels, one said physical channel bearing a pilot signal, characterised in that the power of said physical channel bearing the pilot signal is varied in accordance with the loading in the associated cell

2. A system according to Claim 1 which is a wide band system.

3. A system according to Claim 1 or Claim 2 in which the pilot-bearing physical channel is a Common Downlink Control Physical Channel.

4. A system according to any preceding claim in which there are a plurality of channels and the power in at least one of two adjacent Common Downlink Control Physical Channels is varied so that the overlap of adjacent telecommunication cells is maintained at a known value.

5. A system according to any preceding claim in which the power is decreased from a standard $P_T$ at nominal planned loading in a telecommunication cell of radius R to a value ($P_T*f$) at low loading where

$$f = \frac{R^n}{\left(R+\frac{\Delta}{2}\right)^n},$$

where n is the power loss exponent and $\Delta$ is the undesired increase in width of handoff overlap area induced by the lower loading.

6. In a mobile radio telecommunications system comprising a plurality of base transceiver stations each transmitting information on a physical channel, said physical channel defining a plurality of telecommunications cells of radius R and a required handoff width, each base transceiver station being arranged to sense the telecommunications traffic in the cell which it controls, a method of controlling the hand off width characterized by each base transceiver station varying the power of its physical channel in accordance with the sensed telecommunications traffic.

## FIG. 1

## FIG. 3

# FIG. 2

EP 1 126 735 A1

**European Patent Office**

## EUROPEAN SEARCH REPORT

Application Number

EP 00 30 1169

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 97 08909 A (NOKIA TELECOMMUNICATIONS OY.) 6 March 1997 (1997-03-06) * page 10, line 26 - page 11, line 21 * --- | 1,6 | H04Q7/36 |
| A | EP 0 615 395 A (HITACHI LTD.) 14 September 1994 (1994-09-14) * figures 2-6 * * page 5, line 5 - line 48 * --- | 1-4,6 | |
| X | GB 2 311 191 A (NEC CORP.) 17 September 1997 (1997-09-17) * figure 6 * * page 22, line 27 - page 23, line 26 * --- | 1,6 | |
| X | US 5 475 870 A (WEAVER,JR. ET AL.) 12 December 1995 (1995-12-12) * column 11, line 55 - column 14, line 38 * ----- | 1,6 | |

TECHNICAL FIELDS SEARCHED (Int.Cl.7)

H04Q

The present search report has been drawn up for all claims

| Place of search | Date of completion of the search | Examiner |
|---|---|---|
| BERLIN | 19 June 2000 | Danielidis, S |

EPO FORM 1503 03.82 (P04C01)

7

**ANNEX TO THE EUROPEAN SEARCH REPORT
ON EUROPEAN PATENT APPLICATION NO.**

EP 00 30 1169

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2000

| Patent document cited in search report | | Publication date | Patent family member(s) | | Publication date |
|---|---|---|---|---|---|
| WO 9708909 | A | 06-03-1997 | AU | 3260495 A | 19-03-1997 |
| EP 615395 | A | 14-09-1994 | JP | 6268574 A | 22-09-1994 |
| | | | CA | 2118615 A | 12-09-1994 |
| | | | DE | 69401672 D | 20-03-1997 |
| | | | DE | 69401672 T | 04-09-1997 |
| GB 2311191 | A | 17-09-1997 | JP | 2803716 B | 24-09-1998 |
| | | | JP | 9247085 A | 19-09-1997 |
| | | | AU | 1518997 A | 18-09-1997 |
| | | | US | 5898682 A | 27-04-1999 |
| US 5475870 | A | 12-12-1995 | AU | 687644 B | 26-02-1998 |
| | | | AU | 3675995 A | 29-03-1996 |
| | | | BR | 9506315 A | 05-08-1997 |
| | | | CA | 2173983 A,C | 21-03-1996 |
| | | | CN | 1135824 A | 13-11-1996 |
| | | | EP | 0728401 A | 28-08-1996 |
| | | | FI | 961447 A | 29-05-1996 |
| | | | IL | 115249 A | 30-10-1998 |
| | | | JP | 2968590 B | 25-10-1999 |
| | | | JP | 9508250 T | 19-08-1997 |
| | | | WO | 9608936 A | 21-03-1996 |
| | | | US | 5584049 A | 10-12-1996 |
| | | | ZA | 9507614 A | 18-04-1996 |

EPO FORM P0459

For more details about this annex : see Official Journal of the European Patent Office, No. 12/82